**Europäisches Patentamt**

**European Patent Office**

**Office européen des brevets**

(11) Veröffentlichungsnummer: **0 342 258**
**A1**

(12) # EUROPÄISCHE PATENTANMELDUNG

(21) Anmeldenummer: 88108036.0

(22) Anmeldetag: 19.05.88

(51) Int. Cl.⁴: **D06Q 1/04 , H05K 9/00**

(43) Veröffentlichungstag der Anmeldung:
23.11.89 Patentblatt 89/47

(84) Benannte Vertragsstaaten:
CH DE FR GB LI

(71) Anmelder: **Klotz, Dietmar**
**Biebricher Allee 31**
**D-6200 Wiesbaden(DE)**

Anmelder: **Pütz, Alban**
**Hellgasse 10**
**D-5456 Rheinbrohl(DE)**

(72) Erfinder: **Pütz, Alban**
**Hellgasse 10**
**D-5456 Rheinbrohl(DE)**

(74) Vertreter: **Kossobutzki, Walter, Dipl.-Ing.(FH)**
**Waldstrasse 6**
**D-5419 Helferskirchen(DE)**

(54) **Metallisierte Textilbahn und Verfahren zu deren Herstellung.**

(57) Die metallisierte Textilbahn gemäß der vorliegenden Erfindung stellt eine homogene Metallauflage auf einer Textilbahn dar, die fast so biegsam ist wie die Textilbahn selbst, soweit es sich um Gewebe aus Glasfasern, Kunstharzfasern, Carbonfasern u.dgl.handelt; sie ist daher u.a. geeignet für eine allseitige tapetenähnliche metallische Auskleidung eines Raumes.

So ist es mit Hilfe dieser Erfindung möglich geworden, elektronisch undurchdringbare Faraday's Käfige aus elastischem, also erschütterungs- und verschiebesicherem Material zu schaffen und damit einer der großen technischen Herausforderungen unserer Zeit, der elektronischen Freibeuterei, wirksam zu begegnen.

Die Erfindung beruht im Prinzip auf der Erkenntnis, daß beim Aufsprühen von im Lichtbogen geschmolzenem Stangenmetall sich spinnenähnliche mikroskopische Metallteilchen (5) auf dem Werkstück bilden, während in einer Gasflamme geschmolzenes Metallpulver aufgesprüht kügelchen- oder tröpfchenförmige Teilchen (6) zustande kommen. Die "Spinnenbeine" der spinnenähnlichen Metallteilchen (5) greifen ineinander ein und flechten eine elastich biegsame Metalldecke, die durch das Aufsprühen der Metallkügelchen (6) elektronisch undurchdringlich versiegelt wird, vgl.nebenstehendes Bild.

*Fig.2*

EP 0 342 258 A1

## METALLISIERTE TEXTILBAHN UND VERFAHREN ZU DEREN ERSTELLUNG

Unter "Textilbahn" ist ein langes, im Verhältnis zur Länge entsprechend schmales Gewebestück zu verstehen, das zu einem Textilballen aufrollbar ist, von welchem Stücke in beliebiger Länge abgeschnitten werden können. Die vorliegende Erfindung bezieht sich darauf, eine solche Textilbahn mit einer der Biegsamkeit des Gewebes angepaßten, zuverlässig anhaftenden Metallauflage zu versehen.

Eine solche metallisierte Textilbahn war bisher nicht bekannt. Die in den DE-PS 17 04 785 und DE-OS 24 13 225 beschriebenen Verfahren gehen beide davon aus, über einen Zwischenträger, der praktisch als Druckelement funktioniert, eine dünne Metallschicht auf eine durchlaufende "unendliche" Kunststoffolie aufzudrücken, wobei die Metallschicht vorher im Vakuum auf den Zwischenträger aufgedampft oder galvanisch aufgetragen werden.

Bei diesen beiden Vorveröffentlichungen handelt es sich um schmale Plastikbänder für Verpackungen. Die metallisierten Bänder dienen vorrangig Werbe- und Geschenkzwecken oder der Ausschmückung von Festräumen (Girlanden usw.). Die Haftung der Metallauflage ist eine Aufdruckhaftung und entsprechend gering, auch auf einer Folie. Ob ein solcher metallischer Aufdruck auf ein Gewebe überhaupt möglich und haftsicher ist, kann dahingestellt bleiben.

Eine Metallisierung von Textilien ist im Prinzip bekannt aus der DE-OS 26 59 625 und der DE-PS 31 27 505. Bei der DE-OS 26 59 625 geht es um die Metallisierung eines abgeschnittenen Textilstückes, die mittels eines elektrochemischen Verfahrens erfolgt. Danach wird das metallisierte Textilstück zusammen mit anderen nicht-metallisierten Textilstücken gleichen Zuschnitts mit Kunstharz getränkt und zu einem Stapel zusammengepreßt, um zu vermeiden, daß die starre Metallschicht bei Biegungen brechen oder reißen könnte. Das Ganze dient vorrangig gedruckten Schaltungen.

Nach der DE-PS 31 27 505 wird das Metall in sonst bekannter Weise in geschmolzenem Zustand mittels einer Spritzpistole unmittelbar auf ein zugeschnittenes Textilstück aufgespritzt. Dieses wird, ähnlich wie vorhin, zusammen mit anderen gleichen, jedoch nicht-metallisierten Textilstücken zu einem Stapel zusammengefügt und mit polymerisierbarem Kunstharz getränkt. Der Stapel wird in einem beheizten Formwerkzeug in die gewünschte Form gepreßt, wobei der Kunstharz gleichzeitig polymerisiert wird. Da die Anmelderin die Flugzeugfirma Dassault-Breguet Aviation ist, liegt der Gedanke nahe, daß die Erfindung der Herstellung von Flugzeugteilen dienen soll.

Die vorliegende Erfindung hat in der Hauptsache zur Aufgabe, eine metallisierte Textilbahn zu schaffen, die geeignet ist, wie eine Tapete einen Raum allseitig auszukleiden und somit einen für elektronische Impulse undurchdringlichen Faraday's Käfig zu schaffen. Diese Aufgabe ist ein dringendes Anliegen unserer Zeit, weil die hochentwickelte elektronische Technik praktisch jedem Möglichkeiten bietet, in alle militärische, finanzielle und industrielle Geheimnisse einzudringen und damit ungeheuren Schaden anzurichten.

Darüber hinaus soll die Erfindung eine metallisierte Textilbahn schaffen, die auf kurvige Flächen aufklebbar ist und es mithin ermöglicht, auch solche Flächen kostengünstig mit einem metallischen Überzug zu versehen, z.B. die Kupferauflage auf einem Bootsrumpf. Zu diesem Zweck muß die Metallauflage annähernd so biegsam sein wie das sie tragende Gewebe.

Diese Erfindungsaufgabe ist mit dem zitierten Stand der Technik nicht lösbar. Die aufgedruckten Metallauflagen auf Folie nach DE-PS 17 04 785 und DE-OS 24 13 225 vermögen es schon vom Folienmaterial her ganz offensichtlich nicht, einen zuverlässigen Elektronenschutz darzustellen. Darüber hinaus ist es fraglich, ob die beschriebenen Aufdruckverfahren auf Textilien wirksam sein werden, ganz abgesehen von der Frage, ob ein Aufdruck für derart breite Textilbahnen wie die hier in Frage stehenden überhaupt zuverlässig durchführbar sind.

Auch die metallisierten Textilstücke nach DE-OS 26 59 625 und DE-PS 31 27 505 können die Erfindungsaufgabe der vorliegenden Erfindung nicht lösen. Sie sind ihrem Wesen nach starr und werden lediglich in Folge eines Preßvorgangs in eine dreidimensionale Gestalt gebracht. Zur Auskleidung eines Raumes, um einen Faraday's Käfig zu schaffen, sind sie ungeeignet, schon deswegen, weil sie vorher zugeschnitten werden müssen, und außerdem, weil die unmittelbare Haftung von aufgesprühtem Metall auf Gewebe zweifelhaft ist. Da sie als mehrlagiger Stapel ausgebildet sind, würden sie bei jeder Erschütterung oder größerer Temperaturunterschiede leicht reißen, insbesondere an den Stoßlinien.

Elektronensichere Faraday's Käfige sind bereits erstellt worden, sind aber, wenn sie einen Einbruch elektronischer Impulse zuverlässig abwehren sollen, überaus kostspielig. Es sind amerikanische Elektronenschutzräume bekannt, deren Wände, Decken und Böden mit aneinander verlöteten oder verschweißten Kupferplatten verkleidet sind. Die an Ort und Stelle auszuführenden Löt- oder Schweißvorgänge sind sehr heikel, denn die geringste Unregelmäßigkeit kann einen Durchschlupf für einen Elektronenimpuls bedeuten; nach Fertigstellung der Auskleidung kann man zwar anhand von Messungen feststellen, ob sie dicht ist oder

2

nicht, jedoch nicht, wo sich eine eventuelle Undichtheit befindet. Außerdem ist die starre Blechverkleidung anfällig für Erschütterungen und Verschiebungen der Wände, der Decke und des Bodens. Solche Verschiebungen können schon als Folge größerer Temperaturunterschiede eintreten. Ist die Auskleidung erst einmal undicht, kann man zwar die Tatsache feststellen, jedoch nicht die Undichtigkeit orten.

Man ist bestrebt gewesen, eine preiswertere Auskleidung zu schaffen, indem man mittels Spritzpistole geschmolzenes Metall auf die Wände usw. aufgespritzt hat. Aber selbst unter Verwendung der Lehre aus der DE-PS 21 42 474, die Wandflächen vorher mit einer Klebstoffschicht zu versehen, blieb die aufgesprühte Schicht empfindlich für Erschütterungen und Verschiebungen der Wände usw., und die Gefahr, daß Risse in der Metallschicht entstehen könnten, ist noch größer als bei kompakten Blechplatten.

Wie bereits gesagt, hat die vorliegende Erfindung zur Aufgabe, eine metallisierte Textilbahn zu schaffen, die fast so elastisch und dreidimensional verformbar ist, wie die betreffenden Textilien selbst. Diese Erfindungsaufgabe wird mit den in den Ansprüchen beschriebenen technischen Mitteln gelöst.

Hierbei ist die Erfindung auf die Feststellung aufgebaut, daß beidem Schmelzen von Stangenmetall in einem Lichtbogen und Versprühen dieses Metalls auf ein Werkstück die aufgesprühten mikroskopischen Teilchen die Gestalt von Sternchen oder Spinnen aufweisen, während die Teilchen eines in einer Gasflamme geschmolzenen Metallpulvers mikroskopische Tröpfchen bilder. Aufgesprüht in einer sauerstoffreien (sauerstoffarmen) Atmosphäre z.B. nach DE-GM 86 21 949 werden diese Teilchen nicht oxydiert und auch nicht versintert; sie behalten ihre volle elektrische Leitfähigkeit und die "Finger" der spinnenförmigen Teilchen ihre Elastizität. Diese "Spinnenfinger" greifen ineinander ein und bilden miteinander eine elastische Metalldecke, und die anschließend auf sie aufgesprühten tröpfchenförmigen Teilchen schließen die Lücken; das Ganze stellt eine zwar elastische, aber elektronisch dichte Metallschicht dar.

Die vorher aufgetragenen Haftmittelschichten schützen die Textilfaser gegen die Hitze der Sprühflamme und verbindet die Metalldecke unauflöslich mit der Textilbahn. Ihre Zusammensetzung ist im Prinzip auf den bewährten Haft mittel der DE-OS 33 04 073 begründet.

Von entscheidender Bedeutung für die Erfindung ist das sorgfältige Aufsprühen des geschmolzenen Metalls in einer möglichst sauerstoffreien Atmosphäre bei gleichmäßiger Schichtdicke. Nicht nur hängt die Elastizität und Bruchsicherheit der Metalldecke davon ab, sondern auch deren Leitfähigkeit. Bei billigeren Metallen, wie z.B. bei Fe, führt selbst geringe Oberflächenoxydation zu einer erheblichen Herabsetzung der Leitfähigkeit (optimale Leitfähigkeit beim Fe = 10 m/$\Omega$mm$^2$).

## Ausführungsbeispiel

In der Folge wird anhand von Zeichnungen ein Ausführungsbeispiel der Erfindung dargestellt und erläutert.
Es zeigen:
Figur 1 den Querschnitt eines Streifens einer Textilbahn, stark vergrößert, mit einer dreifachen, in das Textilmaterial eingedrungenen Imprägnierschicht und einer aus zwei verschiedenen Sprühvorgängen aufgesprühten Metallschicht, systematisch und stilisiert,
Figur 2 die schematische Darstellung einer Vergrößerung eines mikroskopisch kleinen Teilausschnitts einer Metallbeschichtung, in der Phase nach dem Aufsprühen der spinnenförmigen Metallteilchen und am Anfang des Aufsprühens der tropfenförmigen Teilchen
und
Figur 3 die Teilansicht der Auskleidung einer Wand mit erfindungsgemäßen Textilbahnen und entsprechenden Abdichtungsstreifen.

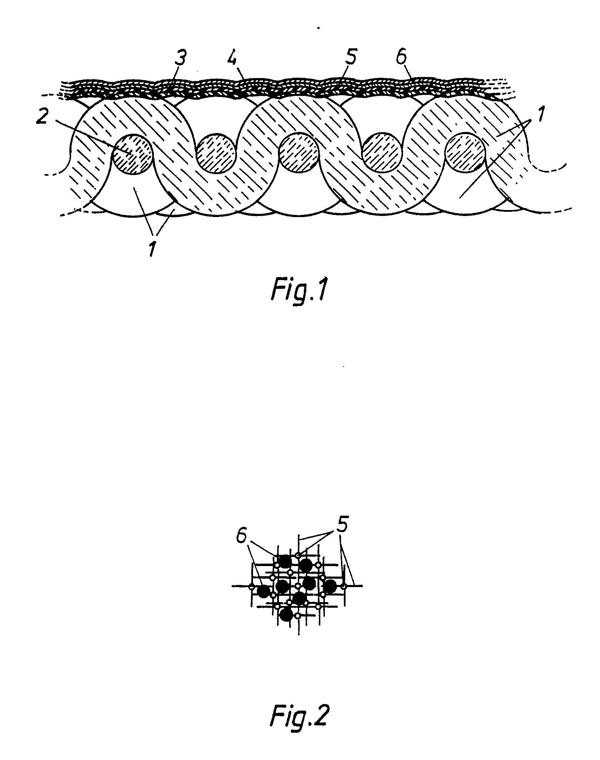

Die Textilbahn des Ausführungsbeispiels ist in bekannter Weise aus Kettfaden 1 und Schußfaden 2 gewoben. Das Textilmaterial kann Glasfaser oder Kunststoffaser sein, jedoch auch Baumwolle, Carbonfaser oder dergleichen.
Auf die Textilbahn ist zunächst ein wasserfester elastischer Haftvermittler 3 aufgebracht, vgl. Figur 1. Der Haftvermittler 3 besteht aus:

3

| | |
|---|---|
| - einem Latex (Dinova-Latexfarbe von den Didier-Werken, Niederdollendorf) | 35 % Gewicht |
| - Wasser (enthärtet) | 23 % " |
| - Quarzmehl | 23 % " |
| - wasserlöslichem Polyvinylchlorid | 9 % " |
| - Acrylharz (Hoechst) | 7 % " |
| - einem Hydrosol (eine wässerige Dispersion von Acrylsäure und Monostyrol) | 2 % " |
| - Alkydharzlack (Leinöl und Polyalkohol) | 1 % " |

Auf der wasserfesten Haftvermittlerschicht 3 ruht eine wasserlösliche Haftvermittlerschicht 4, zusammengesetzt aus:

| | |
|---|---|
| - enthärtetem Wasser | 34 % Gewicht |
| - Quarzmehl | 33 % " |
| - Zuckerlösung (Zucker und Wasser gewichtsgleich) | 14 % " |
| - wasserlöslichem Polyvinylchlorid | 9 % " |
| - Leim (Tapetenkleister) | 7 % " |
| - Metallpulver (Ni) | 3 % " |

Die wasserlösliche Haftvermittlerschicht 4 ist etwa zweimal so stark wie die wasserfeste Haftvermittlerschicht 3; sie messen zusammen etwa 40μm. Die beiden Schichten 3,4 sind teilweise in das Textilgewebe eingedrungen, vgl. Figur 1.

Nach Austrocknen der Haftvermittlerschichten 3,4 folgt eine aufgesprühte Metallschicht 5 aus einem elektrisch gut leitenden Metall wie Cu, Al oder Ag. Wo die Ansprüche an die Leitfähigkeit weniger bedeuten, kann auch Fe verwendet werden. Die mikroskopischen Einzelteilchen der Metallschicht 5 müssen sternoder spinnenförmig sein, vgl. Figur 2. Einzelteilchen dieser Gestalt kommen zustande, indem man mittels einer Spritzpistole mit Lichtbogenanlage geschmolzenes Metall aufsprüht.

Dieses Vorgehen reicht jedoch nicht ohne weiteres aus, um brauchbare Metallschichten im Sinne der vorliegenden Erfindung zu erzeugen, weil die im Sprühstrahl mitgeführte sauerstoffhaltige Atmosphärenluft die Metalltröpfchen unterwegs oxydieren und zumindest teilweise versintern; sie werden dementsprechend starr und brüchig, und die Leitfähigkeit nimmt ab. Durch die Brüchigkeit würden die "Strahlen" der stern- oder spinnenförmigen Teilchen abbrechen, und die erforderliche Biegsamkeit der gesamten Metalldecke käme nicht zustande.

Die notwendige Elastizität der ineinandergreifenden "Strahlen" der Teilchen wird gewährleistet, indem das Aufsprühen des Metalls in einer sauerstoffarmen Atmosphäre erfolgt, z.B. in einer Anlage nach der Lehre der DE-OS 32 33 925 oder besser noch nach der Lehre des DE-GM 86 21 949.9.

Auf der Metallschicht 5 wird die Metallschicht 6 aus gleichem Metall aufgebracht. Die mikroskopischen Einzelteilchen der Metallschicht 6 müssen kugel- oder tröpfchenförmig sein; vgl. Figur 2; diese Form wird dadurch erreicht, daß man Metall in Pulverform in einer Gasflamme zum Schmelzen bringt und mit einer Spritzpistole versprüht. Obwohl hierbei eine Oxydation und teilweise Versinterung für die Biegsamkeit der Gesamtmetalldecke weniger wichtig sind, spielt die damit verbundene Herabsetzung der Leitfähigkeit des Metalls eine Rolle; es ist daher erforderlich, den Spritzvorgang auch hier in einer sauerstofffreien Atmosphäre aus zuführen, wie vorhin beschrieben.

Die Haftvermittlerschichten 3,4 haben erstens den Zweck, die Textilfaser gegen die Hitze der Sprühflamme zu schützen und zu verhindern, daß die aufgesprühten Metallteilchen in die Textilfaser eindringen. Zum anderen sollen sie eine zuverlässige Haftung der Metalldecke an der Textilbahn gewährleisten (Stand der Technik: DE-PS 21 42 474, DE-OS 32 33 925 und DE-OS 33 04 073.

Die Metallschichten 5,6 bilden eine zusammenhängende, die gesamte Textilbahn überlagernde Metalldecke. Diese Metalldecke weist bis zu einer Gesamtstärke von 100 bis 150 μm die gleiche Biegsamkeit auf wie eine Glasfaser-Textilbahn von 1 mm Stärke; bei noch stärkeren Textilbahnen kann die Stärke der Metalldecke 200 μm betragen. Die Einbettung von Haftvermittlern 3,4 und Metallschichten 5,6 in die Textilbahn ist total.

Die Biegsamkeit und gleichzeitige Uniformität der Metalldecke 5,6 kommt durch die Verbindung von stern- oder spinnenförmigen Metalleinzelteilchen miteinander zustande. Die "Strahlen" oder "Finger" der mikroskopischen Teilchen der Metallschicht 5 greifen ineinander und stellen miteinander eine biegsame Metalldecke 5 dar.

Die kugel- oder tröpfchenförmigen Teilchen der Metallschicht 6 füllen die Zwischenräume zwischen den "Strahlen" der Metallschicht 5 aus und überlagern die Schicht 5. Die beiden Metallschichten 5,6 stellen mithin in der Praxis eine einzige Schicht dar, indem die kugel- oder tröpfchenförmigen Teilchen die Zwischenräume an den sternenförmigen Teilchen ausfüllen. Dabei machen die kugel- oder tröpfchenförmigen Teilchen die gesamte Metalldecke elektronisch dicht, ohne die Biegsamkeit der Decke zu beeinträchtigen.

Wie in der Beschreibungseinleitung ausgeführt, ist es eine der großen technischen Herausforderungen unserer Zeit, elektronische Datenanlagen, Rechenzentren, Datenübertragungs- und Nachrichtenübermittlungseinrichtungen gegen Einbruch elektronischer Impulse von außen abzusichern. Dieses gilt insbesondere für den militärischen Sektor, aber auch für Banken und für Bereiche der Industrie, z.B. im Bereich der Forschung und Entwicklung. Die Erfindung öffnet hier erstmals einen Weg, bei einem wirtschaftlich tragbaren Kostenaufwand gefährdete

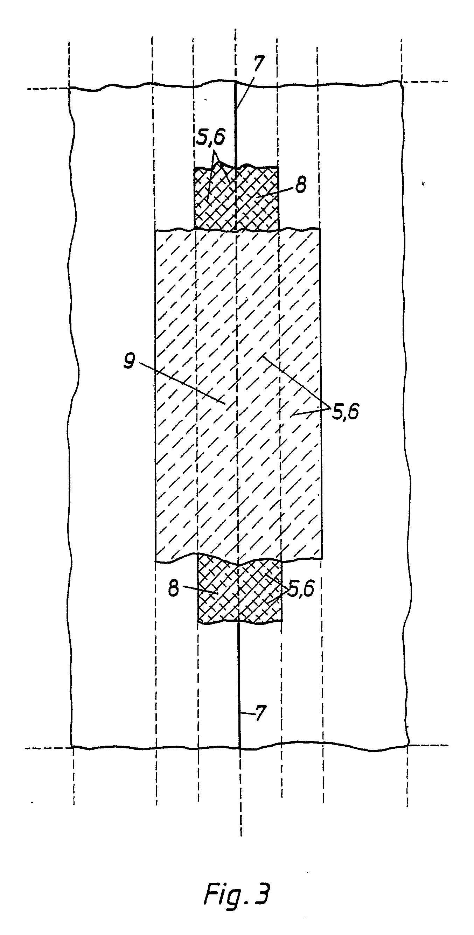

Räume zuverlässig elektronisch abzusichern, indem man sie mit metallisierten Textilbahnen gemäß der Erfindung tapetenähnlich auskleidet und damit einen für elektronische Impulse undurchdringbaren Faraday's Käfig erstellt. Die Stoßränder der Textilbahnen werden dadurch überbrückt, daß man jeden Stoßrand 7 (Figur 3) mit einem schmalen Textilstreifen 8 überklebt, der an beiden Seiten gemäß der Erfindung metallisiert ist. Auf den Textilstreifen 8 wird ein etwa zweimal so breiter, nur einseitig metallisierter Textilstreifen 9 aufgeklebt, und zwar mit der metallischen Seite gegen den schmäleren Streifen 8. Als Kleber kann ein handelsüblicher Kontaktkleber verwendet werden. Der Klebevorgang soll unter Preßdruck geschehen; unter Druck bleibt die Leitfähigkeit der aufeinander aufliegenden metallisierten Flächen über die Berührungsflächen hinweg bestehen. An Türen und Fenstern wird nach demselben Prinzip elektronisch abgedichtet, jedoch ist dort der breite Textilstreifen 9 beidseitig metallisiert.

Die Biegsamkeit der erfindungsgemäßen Textilbahn bei mechanischer Untrennbarkeit der Metallschichten 5,6 von der Textilunterlage und bei blechartiger Uniformität der Metalloberfläche eröffnet viele andere Verwendungsmöglichkeiten, wenngleich nicht von der überragenden Bedeutung der elektronischen Abschirmung. Als Beispiel kann die Verkleidung eines Schiffsrumpfes mit Kupfer genannt werden, zu dem Zweck, die Bewachsung des unter der Wasserlinie liegenden Rumpfteils mit Algen usw. zu verhindern.

Kupferverkleidungen sind teuer und haben den Nachteil, daß sie das Gewicht des Schiffes erheblich vergrößern, mit entsprechend negativen Auswirkungen auf Geschwindigkeit und Manövrierbarkeit, was insbesondere bei Sportyachten von Bedeutung ist. Das Aufkleben von erfindungsgemäßen kupferüberzogenen Textilbahnen auf den Schiffsrumpf ergibt eine relativ sehr leichte Kupferverschalung bei einem Kostenaufwand, der weit geringer ist als bei einem herkömmlichen Kupferbelag.

## Liste der Bezugzeichen

1 Kettfäden der Textilbahn
2 Schußfäden der Textilbahn
3 wasserfester Haftvermittler
4 wasserlöslicher Haftvermittler
5 Metallschicht aus spinnenförmigen Teilchen
6 Metallschicht aus kugelförmigen Teilchen
7 Stoßrand zweier aneinanderliegenden Textilbahnen
8 beidseitig metallisierter Textilzwischenstreifen
9 einseitig metallisierter Deckstreifen

## Ansprüche

1. Metallisierte Textilbahn, bei welcher die Metallisierung durch Aufsprühen eines geschmolzenen Metalls auf die Textilbahn erfolgt, insbesondere zur Auskleidung von elektronisch abzusichernden Räumen (Erstellung von "Faraday's Käfigen"), in welche elektronische Impulse nicht einzudringen vermögen, jedoch auch zu metallischer Auskleidung von dreidimensional kurvig verlaufenden Flächen, dadurch gekennzeichnet, daß die Textilbahn zumindest an der einen Bahnfläche eine von einem mit Quarzmehl, Acrylsäure und Alkydharz angereicherten, getrockneten Latex eines Polymers bestehende erste Haftvermittlerschicht (3) aufweist, auf welcher eine zweite Haftvermittlerschicht (4) aus einer Quarzmehl und Zucker enthaltenden getrockneten Wasserdispersion ruht, worauf eine Metallschicht (5) aus spinnenförmigen mikroskopischen Einzelteilchen und schließlich eine Metallschicht (6) aus kügelchen- oder tröpfchenförmigen mikroskopischen Teilchen des gleichen Metalls folgen.

2. Metallisierte Textilbahn nach Anspruch 1, dadurch gekennzeichnet, daß die Metallschichten (5,6) aus Kupfer, Aluminium, Silber oder in geeigneten Fällen aus Eisen o.ä.bestehen.

3. Verfahren zur Erstellung einer metallisierten Textilbahn nach Anspruch 1, dadurch gekennzeichnet, daß auf die Textilbahn zunächst ein wasserfester Haftvermittler (3) aufgetragen wird, zusammengesetzt aus:

| | |
|---|---|
| - ein Latex (Feindispersion eines Polymers) | 35 % Gewicht |
| - Wasser (enthärtet) | 23 % " |
| - Quarzmehl | 23 % " |
| - Polyvinylchlorid, wasserlöslich | 9 % " |
| - Acrylsäure | 7 % " |
| - ein Hydrosol (wässerige Dispersion von Acrylsäure und Monostyrol) | 2 % " |
| - Alkydharzlack (Leinöl und Polyalkohol) | 1 % " |

worauf ein wasserlöslicher Haftvermittler (4) folgt, bestehend aus:

| | |
|---|---|
| - entspanntes (enthärtetes) Wasser | 35 % Gewicht |
| - Quarzmehl | 33 % " |
| - Zuckerlösung (Zucker und Wasser gewichtsgleich) | 13 % " |
| - wasserlöslicher Polyvinylchlorid | 9 % " |
| - Leim (Tapetenkleister) | 7 % " |
| - Metallpulver (Ni) | 3 % " |

ferner wird nach Austrocknen der Haftvermittler (3,4) aus einer Spritzpistole mit Metalldraht im Lichtbogen unter Ausschluß von Sauerstoff geschmolzenes Metall (5) auf die Haftvermittler aufgesprüht und schließlich aus einer Spritzpistole mit Gasflamme Metallpulver desselben Metalls geschmolzen und als Metallschicht (6) auf die Metallschicht (5) aufgetragen.

Fig.1

Fig.2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | DE-A-3 712 192 (PÜTZ ALBAN)<br>* Insgesamt *<br>--- | 1-3 | D 06 Q 1/04<br>H 05 K 9/00 |
| A | DE-A-3 445 997 (TOYODA GOSEI CO., LTD)<br>* Ansprüche 1-3,5,9 *<br>--- | 1-3 | |
| A | US-A-1 817 311 (M.C.R. HEDDE)<br>--- | 1 | |
| A,D | DE-A-3 127 505 (AVIONS MARCEL DAUSSAULT-BREGUET AVIATION)<br>* Ansprüche *<br>----- | 1 | |
| | | | **RECHERCHIERTE SACHGEBIETE (Int. Cl.4)**<br><br>D 06 Q<br>H 01 Q<br>H 05 K |

Der vorliegende Recherchenbericht wurde für alle Patentansprüche erstellt

| Recherchenort | Abschlußdatum der Recherche | Prüfer |
|---|---|---|
| DEN HAAG | 15-02-1989 | MINI A.E. |